# FASCICULE DE BREVET EUROPEEN

(11) **EP 0 433 134 B1**
(45) Date de publication et mention de la délivrance du brevet: **27.10.1993**
(21) Numéro de dépôt: 90403452.7
(22) Date de dépôt: 05.12.1990
(51) Int. Cl.: B65G 47/14

(54) **Dispositif d'impression à jet d'encre pour paillettes de conditionnement de liquides biologiques**
Tintenstrahldruckvorrichtung für Aufbewahrungsröhrchen für biologische Flüssigkeiten
Ink jet printing device for tubes for storing biological liquids

(30) Priorité: 11.12.1989 FR 8916341
(43) Date de publication de la demande: 19.06.1991
(73) Titulaire: Cassou, Robert, F-18700 Aubigny-sur-Nère (FR); Cassou, Maurice, F-61300 L'Aigle (FR); Cassou, Bertrand, F-61300 L'Aigle (FR)
(72) Inventeur: Cassou, Robert, F-18700 Aubigny-sur-Nère (FR); Cassou, Maurice, F-61300 L'Aigle (FR); Cassou, Bertrand, F-61300 L'Aigle (FR)
(74) Mandataire: CABINET BONNET-THIRION

(56) Documents cités:
- FR-A- 2 593 482

## Description

La présente invention concerne un dispositif d'impression a jet d'encre pour paillettes cylindriques de conditionnement de liquides biologiques du genre décrit notamment par les demandeurs dans leur brevet FR-A-2 593 482.

Ces appareils antérieurs selon FR-A-2 593 482 et selon le préamble de la revendication 1 comportaient en combinaison avec une machine d'impression à jet d'encre, une trémie de chargement avec moyen de guidage vers un couloir de distribution, un organe de prélèvement unitaire et un organe d'acheminement longitudinal des paillettes successives à une tête d'impression de la machine.

Tout en donnant satisfaction quant aux conditions générales de leur fonctionnement, ces appareils antérieurs souffrent de limitations dans leurs performances et dans leurs aptitudes à l'automatisation de leur fonctionnement, en particulier avec les machines d'impression modernes adaptées à être commandées par ordinateur et à fonctionner avec des vitesses d'impression considérables, par exemple de l'ordre de 500 caractères par seconde.

Le besoin s'est fait sentir ainsi d'une amélioration des performances des moyens de chargement, de prélèvement unitaire et d'acheminement longitudinal des paillettes et la présente invention a notamment pour objet d'y parvenir grâce à un allègement, voire suppression de certains moyens mécaniques antérieurement mis en oeuvre pour la commande des divers mouvements des paillettes. De manière générale, il semble difficile, en effet, d'envisager un allègement des divers organes mécaniques (butées formant tiroirs, galets de contacts animés d'un mouvement de va-et-vient, leviers et cames de commande, et...) dans des mesures compatibles avec la légèreté des paillettes à manipuler et avec les cadences de fonctionnement susceptibles d'être envisagées par les seules performances des machines d'impression et les automatismes susceptibles de s'associer à celles-ci.

Le principal moyen préconisé dans cette perspective par la présente invention, consiste essentiellement dans une action pratiquement dépourvue d'inertie que rend possible, dans la manutention des paillettes, l'action d'une dépression convenablement organisée, que ce soit en vue du prélèvement unitaire des paillettes successivement délivrées, par un couloir de distribution, ou pour assurer la solidarisation par simple adhérence des paillettes successives avec un train de galets propulseurs susceptibles d'être animés d'une vitesse de propulsion considérable.

Ce moyen général rend possible, selon un aspect de l'invention, la combinaison avec une machine d'impression à jet d'encre, commandée par automate, éventuellement associé à un ordinateur affecté, d'un distributeur de paillettes du genre considéré, cette combinaison étant notamment caractérisée par la disposition, en bout d'un couloir d'admission de paillettes, d'un panneau de façade avec fente d'appel reliée à une source de dépression et d'une palette de prélèvement individuel animée d'un mouvement de balayage à va-et-vient sur ledit panneau.

Grâce à cette disposition, chaque paillette incidente étant immobilisée par un moyen pratiquement dépourvu d'inertie, qui est l'effet de succion exercé à l'entrée de la fente d'appel, le prélèvement de la paillette ainsi immobilisée par une action pratiquement instantanée peut être assuré par simple balayage de la façade au moyen d'une palette d'une extrême légéreté susceptible d'être entraînée avec très peu d'énergie dans un mouvement alternatif à cadence très élevée.

En complément et selon un autre aspect de l'invention, la propulsion longitudinale des paillettes successivement délivrées ainsi sur l'organe d'acheminement longitudinal, est assurée au moyen d'un train de galets à gorge, de son côté associé à une source de dépression de sorte que là encore c'est l'effet d'une succion qui assure pratiquement sans inertie l'adhérence requise pour un entraînement irréprochable des paillettes sur un train de galets propulseurs susceptibles d'être entraînés à des vitesses tangentielles considérables.

Il devient possible ainsi de réaliser, en combinaison avec une imprimante ultrarapide à commande par automate et ordinateur, un distributeur capable de travailler à des cadences considérables, de l'ordre de 20.000 paillettes à l'heure par exemple, en tirant profit ainsi des possibilités ouvertes par les moyens informatiques les plus modernes, en matière de rendement, de gestion et de sécurité des installations concernées.

Les caractéristiques et avantages de l'invention ressortiront d'ailleurs de la description qui va suivre, à titre d'exemple, en référence aux dessins annexés ou :

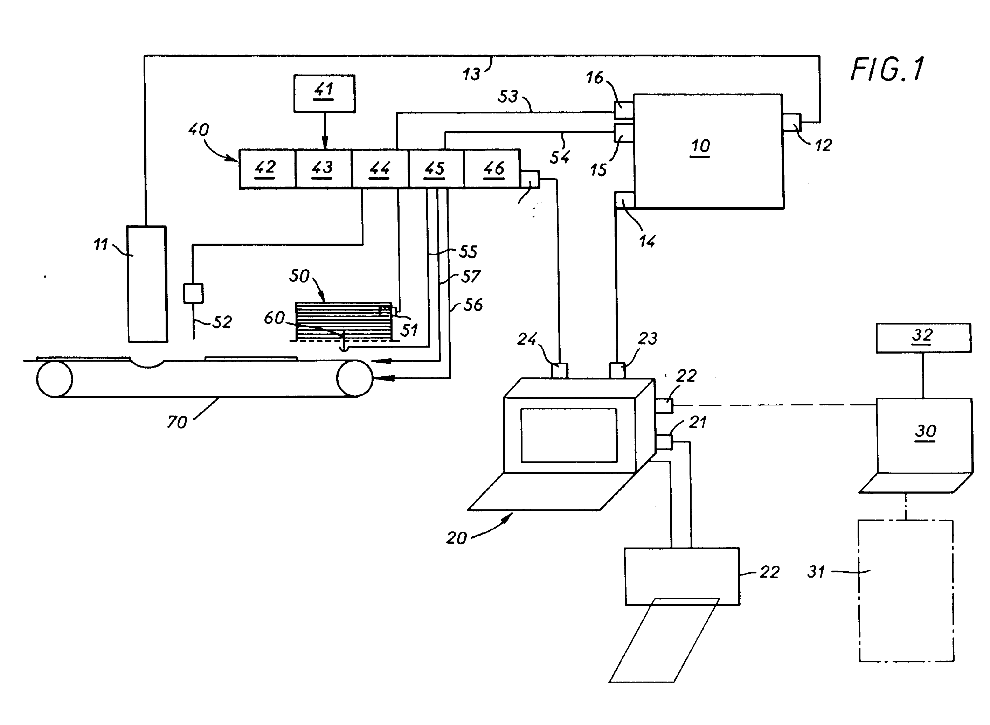

la figure 1 est un schéma d'ensemble d'un distributeur selon l'invention commandé par automate avec ordinateur affecté en liaison avec un ordinateur central ;
la figure 2 est une vue en élévation du distributeur en coupe partielle selon le plan II-II de la figure 3, le couvercle du coffret propulseur étant enlevé ;
la figure 3 est une vue en élévation latérale du distributeur, en coupe partielle, selon les plans III-III de la figure 2 ;
la figure 4 est une vue à plus grande échelle de la zone IV de la figure 3 ;
la figure 5 est une vue à plus grande échelle encore du profil d'une gorge de galet propulseur ;
la figure 6 est une vue en perspective de la trémie de chargement ;
la figure 7 est une vue en élévation latérale d'une variante où le distributeur est alimenté par la sortie d'une machine de conditionnement des paillettes ;
la figure 8 est une vue en plan correspondant à la figure 7.

Selon la forme de réalisation choisie et représentée l'invention est appliquée à une installation équipée d'une machine d'impression désignée par la référence 10, en l'occurrence du type DOMINO AMJET à 64 caractères ASCII avec matrice de 7 x 5 points. Elle comporte une tête d'impression 11 reliée à une sortie 12 par un câble 13, tandis qu'il est prévu trois entrées de données 14, 15, 16. L'entrée 14 est reliée à un micro ordinateur 20 affecté à l'installation, le cas échéant lui-même relié à un ordinateur central 30 de l'établissement concerné tel qu'un centre d'insémination artificielle avec une banque de données indiquée schématiquement en 31 et des appareillages spécifiques, comme par exemple un spectrophotomètre indiqué en 32 servant à contrôler la dilution d'un éjaculat et à déterminer le nombre de paillettes d'un type donné à réaliser avec le prélèvement. L'ordinateur central assurera donc de manière générale la gestion de l'ensemble du centre, des stocks de paillettes, des diverses informations relatives à l'obtention et à l'utilisation de celles-ci.

L'ordinateur 20 affecté à l'installation d'impression aura de son côté pour mission de gérer l'exécution des opérations d'impression des paillettes y compris le cas échéant la commande, par une sortie 21 prévue à cet effet, d'une imprimante matricielle sur papier 22, d'enregistrement et de récapitulation journalière des informations relatives aux paillettes traitées et imprimées.

L'ordinateur affecté 20 est ici du type PC 16/16, adapté à gérer un automate 40, en l'occurrence un matériel SIEMENS SIMATIC S5-100U commandé par une console 41 dite opérateur OP 393. L'automate 40 comporte essentiellement un bloc d'alimentation 42, une unité centrale de traitement 43, un module d'entrée 44, un module de sortie 45 et un module 46, constituant une interface de liaison avec l'ordinateur 20.

Les communications entre ordinateurs, imprimantes et l'automate s'opèrent de manière classique au moyen de ports série tels qu'indiqués en 21 à 24 sur l'ordinateur 20, en 14 sur l'imprimante 10 et en 405 sur l'automate.

La console opérateur 41 joue à l'égard de l'automate 40 le rôle de console de programmation. Etant reliée à l'unité centrale 43 par un cordon souple, elle peut être tenue à la main comme une calculatrice de poche et permet, d'une part, le réglage de temporisateurs et de compteurs, et, d'autre part, l'affichage des textes à imprimer grâce à un clavier alphanumérique à deux lignes de 16 caractères. Le message ainsi composé qui est mis en mémoire dans l'unité centrale 43 peut comporter dans le cas de l'exemple considéré jusqu'à 82 caractères et espaces en fonction des caractéristiques de la tête d'impression et de la place disponible selon la longueur des paillettes qui est en général fixée à 133mm.

Les modules dits d'entrée 44 et de sortie 45 de l'automate sont enfin affectés aux organes de contrôle et de commande du distributeur d'impression proprement dit que l'on va décrire ci-après de façon détaillée dans ses diverses parties comprenant essentiellement un moyen 50 d'introduction de paillettes, un moyen 60 de prélèvement individuel et un convoyeur 70 de propulsion et d'éjection.

Le module d'entrée 44 reçoit les signaux délivrés par deux capteurs 51, 52 respectivement destinés à surveiller la présence de paillettes au niveau du moyen d'introduction 50, d'une part, et immédiatement en amont de la tête d'impression Il, d'autre part.Il a pour fonction de diriger par la ligne 53 un signal de défaut sur une borne 16 de l'imprimante 10. Une borne 15 de l'imprimante envoie de son côté, en situation normale, par une ligne 54, un signal d'impression vers le module 45, dit de sortie de l'automate, lequel est adapté à alimenter par les lignes 55, 56, 57, les moyens de prélèvement et de propulsion à considérer maintenant en référence aux figures suivantes.

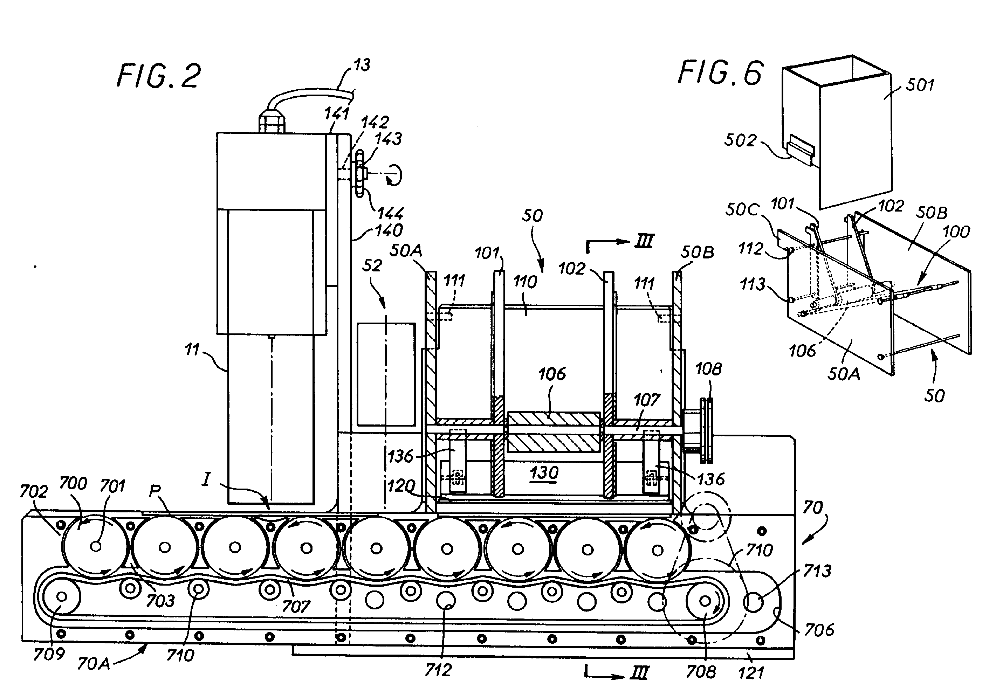

Selon la forme de réalisation des figures 2 à 4, le moyen d'introduction de paillettes est du type à trémie d'alimentation permettant le chargement horizontal de paillettes P entre deux flasques parallèles 50A, 50B, au-dessus d'un fond 100 et en regard d'une paire de déflecteurs 101, 102 en forme de spatule de ski avec une face de butée 103 sensiblement perpendiculaire au fond 100 et une face 104 parallèle à ce fond et écartée de celui-ci d'une distance légèrement supérieure au diamètre des paillettes à recevoir ; il se détermine ainsi entre le fond incliné 100 et les faces 104 des spatules 101, 102, un couloir de guidage permettant la descente par gravité des paillettes vers un panneau de façade 110.

Le dispositif de réception et de guidage ainsi constitué est complété par un rouleau excentrique 106 porté entre les déflecteurs 101, 102 par un axe 107 qui porte sur l'un des côtés latéraux de la trémie 50 une poulie 108 adaptée à recevoir une courroie d'entraînement en rotation à contre sens de la direction de progression des paillettes en translation transversale dans le couloir de distribution 104. Ceci évite tout risque de bourrage de la distribution en repoussant vers le haut à chaque rotation les paillettes qui tendent à s'accumuler à l'entrée du couloir.

La trémie de chargement ainsi constituée est une structure légère facilement interchangeable présentant par exemple la forme illustrée à la figure 6 ; les deux flasques 50A, 50B présentant chacun une patte-crochet 50C adaptée à s'accrocher par emboîtement sur des têtons ménagés à cet effet de part et d'autre de la partie supérieure du panneau de façade 110 du distributeur. Les déflecteurs 101, 102 sont de leur côté assemblés avec les flasques 50A, 50B au moyen de tiges-entretoises 112, 113, chacun des déflecteurs 101, 102 étant doublé dans ce montage d'une plaquette de renfort 115 présentant une patte 116 d'appui sur le bord supérieur du panneau de façade 110.

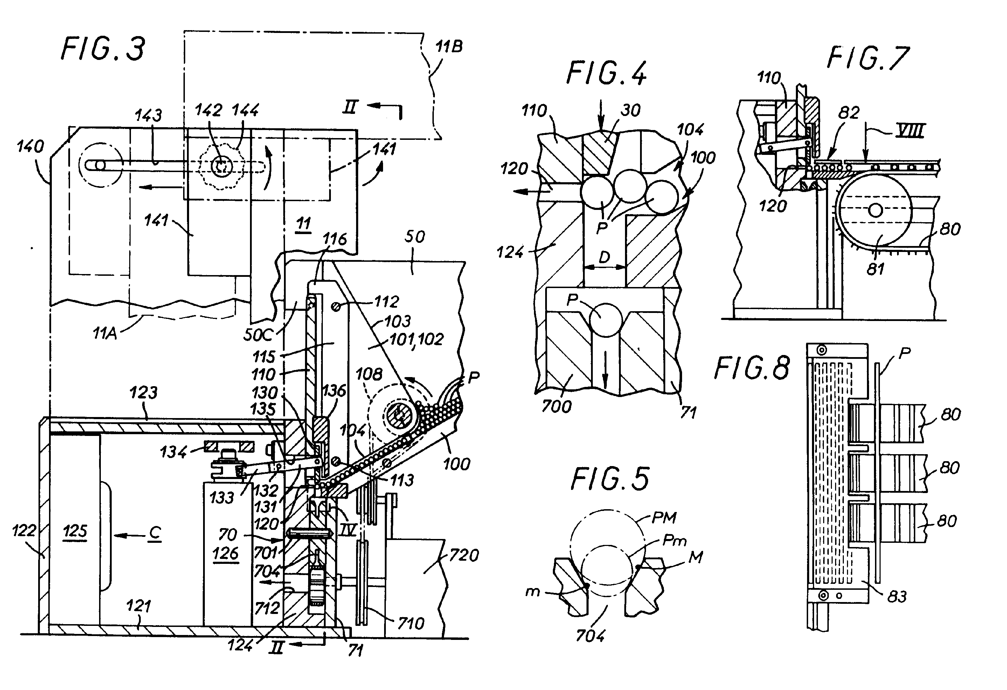

Une trémie de chargement 50 sera, en principe, prévue pour chaque diamètre de paillette, ce diamètre déterminant, comme on l'a vu, la dimension transversale du couloir de guidage 104. Quoi qu'il en soit, et selon un aspect de la présente invention, le couloir de guidage doit déboucher en regard d'une fente dite d'appel 120 ménagée à cet effet au bas du panneau de façade 110 et à une certaine distance D (figure 4) de cette paroi.

Avant d'aborder la description détaillée du distributeur proprement dit, on notera encore en référence à la figure 6, la possibilité d'association à la trémie de chargement 50, d'un guide de chargement 501; celui-ci se présente sous la forme d'une boîte sans fond susceptible de s'emboîter au moyen de pattes 502 sur les bords supérieurs des deux flasques 50A, 50B et à constituer ainsi un couloir de guidage vertical de nature à faciliter le chargement dans la trémie d'un paquet de paillettes. Un tel paquet peut être conditionné dans un emballage déchirable porteur d'une identification de son contenu ; cette identification est avantageusement prévue par un étiquetage à code barre adapté à coopérer avec un lecteur de code barre ménagé à cet effet dans une zone de contrôle optique du distributeur.

Dans la forme de réalisation illustrée aux figures 2 et 3, ce distributeur comporte au dessus d'un socle 121, un caisson C de forme générale parallélépipédique délimité (cf Fig 3) par des parois arrière 122, supérieure 123 et antérieure 124 et servant de logement à un moteur-ventilateur 125 ainsi qu'à un électro-aimant 126 à axe vertical.

Le panneau de façade 110 déjà mentionné surmonte la paroi antérieure 124 du caisson et double une partie supérieure de celle-ci en y déterminant la fente d'appel 120 au dessus et en regard de laquelle est adaptée à se déplacer à va-et-vient une palette de prélèvement 130.

Cette palette de prélèvement est adaptée à coulisser à va-et-vient au contact de la face antérieure du panneau de façade 110, étant articulée à cet effet aux extrémités d'une fourchette de commande à deux branches 131 qui est montée libre en rotation sur un axe 132 et attelée par un levier 133 à l'armature mobile de l'électro-aimant 126. Cette armature est sollicitée en position haute au contact d'une butée 134 par un ressort de rappel (non détaillé) et entraînée dans la position abaissée lorsque la bobine de l'électro-aimant est alimentée.

Chacune des branches de la fourchette de commande 131 traverse une fente 135 ménagée à cet effet dans la paroi 124 et dans le panneau de façade et un élément de bandeau de guidage 136 est ménagé sur le panneau de façade en regard de chaque attelage de la fourchette de commande 131.

L'opération de prélèvement comporte donc, selon un aspect de la présente invention, après immobilisation par aspiration de chaque paillette incidente P en regard de la fente d'appel 120 (Fig 4), le refoulement de cette paillette par abaissement de la palette de prélèvement 130 sur le dispositif de propulsion 70 que l'on va décrire maintenant.

Le dispositif de propulsion 70 selon l'invention est réalisé sous la forme générale d'un coffret parallélépipédique plat et allongé en façade du caisson et débordant latéralement vers la gauche de ce caisson vu de face. Dans la vue en élévation de la Figure 2, le caisson proprement dit se trouve limité vers la gauche par un panneau latéral 140 qui sert de support à la tête d'impression Il et qui délimite entre lui-même et le panneau de façade 110 une zone 52 de logement des moyens de contrôle optique. On voit donc que le coffret 70 comporte une partie terminale 70A se prolongeant, en porte-à-faux , au delà du caisson avec lequel il partage la paroi 124 (Fig 3).

Cette paroi 124 qui borde le caisson en façade constitue le corps principal du coffret 70 avec la forme visible sur la figure 2 où l'on a enlevé le couvercle 71 adapté à refermer le coffret en façade. Cette paroi apparaît ainsi comme un élément complexe pouvant être moulée et/ou usinée et logeant dans sa partie supérieure une rangée de galets 700 montés libres en rotation sur des axes 701, chacun de ces galets étant enveloppé sur environ un quart de sa périphérie par une paroi de confinement périphérique telle que 702 à l'extrémité de la rangée et par une pièce biconcave 703 de séparation entre deux galets voisins.

Comme il est visible aux figures 3 à 5, chaque galet présente une gorge profonde s'étendant en sens radial sur une portion notable du rayon, cette gorge présentant sur sa partie courante une largeur inférieure au plus petit diamètre des paillettes à traiter (Pm) et à l'entrée un profil évasé jusqu'à une largeur légèrement inférieure au diamètre maximal de paillettes à manipuler (PM).

La partie inférieure du coffret 124 dégage un couloir allongé 706 servant de logement à une courroie d'entraînement 707 s'étendant entre une poulie motrice 708 et une poulie de renvoi 709 et passant sur une série de galets tendeurs disposés entre galets 700 successifs. La poulie motrice est solidaire d'une poulie d'entraînement 710 attelée par courroie 711 à un moteur 720 sur l'arbre duquel est pris également le mouvement transmis par courroie à la poulie 108 de la trémie d'alimentation.

Le coffret 70 présente enfin dans sa paroi dorsale une série de trous 712 de communication avec l'espace interne du caisson C, un tel trou étant disposé à l'aplomb de chacun des axes 701 situés dans la zone du caisson et un tel trou supplémentaire 713 étant ménagé encore au delà (à droite) de l'axe de poulie 708.

Tous ces trous 712 et 713 débouchent à l'intérieur du caisson C : il en résulte que, lorsque le ventilateur 125 est en fonctionnement, l'air étant pompé à travers ces divers trous (en même temps qu'à travers la fente d'appel 120) une dépression s'établit à l'entrée accessible par le haut de la gorge évasée de chacun des galets 700, de sorte qu'une paillette quelconque, une fois parvenue à ce niveau, s'y trouve fermement maintenue par l'effet de la dépression, sans que celle-ci fasse obstacle à la propulsion de la paillette à une vitesse linéaire pratiquement égale à la vitesse tangentielle mesurable aux points de contact (tels que m ou M sur la figure 5).

Ainsi la paillette une fois prélevée sur la fente d'appel 120 par abaissement de la palette 130 (Fig 4) se trouve immédiatement "embarquée" sur le train de galets 700 sous-jacent et propulsée par celui-ci en direction du poste d'impression I, donc vers la gauche sur la figure 2. La référence 52 désigne sur cette figure la zone de contrôle optique où le passage de la paillette produit un signal correspondant dans un capteur qui va autoriser, comme on l'a vu, le déclenchement du signal d'impression dirigé sur la tête d'impression 11 par le câble 13.

Selon une disposition de la présente invention, la tête d'impression 11 est montée sur le panneau transversal 140 par l'intermédiaire d'une plaque 141 solidarisée avec un côté du corps de la tête et porteuse d'une tige filetée 142 adaptée à coulisser dans une fente 143 sensiblement horizontale du panneau 140 et à s'immobiliser au choix à l'avant ou à l'arrière de cette fente, dans une position verticale ou horizontale, au choix, par serrage d'un bouton moleté 144.

Grâce à cette disposition il est possible de placer la tête d'impression en position normalement verticale de travail non seulement dans la position d'impression indiquée en traits pleins sur la figure 3, mais encore dans une position reculée 11A illustrée en traits mixtes où la tête dégage commodément le dispositif antérieur de propulsion pour réglage ou entretien de celui-ci. Mais il est possible, en outre, d'adopter pour la tête d'impression la position indiquée en 11B où, après rotation de 90° autour de l'axe de la tige 142, elle prend une position horizontale qui est de nature à faciliter notablement les opérations d'entretien (nettoyage, réglage, chargement d'encre, etc ...) de la tête elle-même.

Les figures 7 et 8 sont relatives à une variante de réalisation dans laquelle le chargement des paillettes à imprimer s'opère non pas au moyen d'une trémie d'alimentation, mais directement par la sortie d'un appareil de conditionnement de paillettes du genre comprenant une station de remplissage et un dispositif de soudage de l'une au moins des extrémités des paillettes remplies. Une machine de ce genre, produite par la Société Instruments de Médecine Vétérinaire (IMV) sous la référence MRS 3 est adaptée à traiter ainsi les paillettes par groupes de trois et comporte à sa sortie un système de bandes transporteuses telles qu'illustrées schématiquement aux figures 7 et 8 ; ce système comporte à titre d'exemple trois bandes crantées 80 passant sur un rouleau de renvoi commun 81. Chaque paillette, telle que P, sortant de la machine (non représentée) arrive maintenue entre deux crans successifs de chacune des bandes 80 et se trouve libérée lorsque ces bandes s'enroulent autour du rouleau de renvoi 81, cet enroulement provoquant un écartement angulaire relatif dans chaque paire de crans successifs. Chaque paillette ainsi libérée se trouve transférée ainsi dans un couloir d'admission 82 dont le fond 83 comporte des prolongements de part et d'autre et entre les bandes 80. Ce couloir d'admission peut être plus ou moins légèrement en pente et aboutit en tout cas en regard de la fente d'appel 120 du distributeur précédemment décrit que l'on retrouve par ailleurs sans autre changement que la suppression de la trémie de chargement 50.

La cadence horaire du distributeur selon la présente invention étant toujours supérieure au débit d'une machine de conditionnement du genre considéré, par exemple du type MRS 3, il n'y a aucun risque de bourrage à l'entrée. L'adaptation du distributeur à la machine de conditionnement ne nécessite qu'un alignement approprié du couloir d'admission 82 avec le niveau supérieur du système de bandes transporteuses de sortie et plus spécialement du rouleau de renvoi terminal 81 de ce système.

## Revendications

1. Dispositif d'impression à jet d'encre pour paillettes cylindriques de conditionnement de liquides biologiques (P) comprenant, en combinaison avec une machine d'impression à jet d'encre (10) commandée par automate (20) :
- un couloir d'admission (104) adapté à guider les paillettes successives,
- un organe de prélèvement unitaire (130),
- un système d'acheminement (70) adapté à faire défiler les paillettes une à une en regard d'une tête d'impression,
caractérisé par la disposition, en bout du couloir d'admission (100) d'un panneau de façade (110) avec fente d'appel (120) reliée à une source de dépression et d'une palette de prélèvement individuel (130) animée d'un mouvement de balayage à va-et-vient sur ledit panneau.

2. Dispositif selon la revendication 1, caractérisé par un système d'acheminement (70) passant au-dessous du panneau de façade et sous un poste d'impression.

3. Dispositif selon la revendication 2, caractérisé en ce que le système d'acheminement comporte un train de galets à gorges (700) se succédant dans un carter passant au-dessous du panneau de façade (110) et d'un poste d'impression (11), le volume intérieur de ce carter étant en communication avec une source de dépression par une pluralité de trous (712) ménagés dans une paroi dorsale et avec l'atmosphère par un couloir ouvert vers le haut et recevant dans son fond une partie émergeante des galets successifs du train.

4. Dispositif selon la revendication 3, caractérisé en ce qu'un caisson équipé d'un groupe moteur ventilateur (25) constitue source commune de dépression pour la fente d'appel (120), et pour le train de galets (700).

5. Dispositif selon la revendication 4, caractérisé en ce que le caisson contient également un moteur alternatif (126) de commande de la palette de prélèvement.

6. Dispositif selon la revendication 5, caractérisé en ce que ledit moteur comporte un électro-aimant à axe vertical avec armature attelée à une fourchette de commande (131) avec deux bras respectivement articulés aux deux extrémités de la palette (130) et traversant des fenêtres (135) ménagées à cet effet dans la paroi de façade du carter.

7. Dispositif selon l'une quelconque des revendications 1 à 6, caractérisé par une tête d'impression (11) montée sur un panneau latéral par l'intermédiaire d'un axe (142) susceptible de se placer à une profondeur choisie dans une fente (143) transversale par rapport à la paroi de façade de l'appareil, la tête pouvant elle-même prendre par rapport à cet axe une position, soit verticale de travail (11A), soit horizontale d'entretien (11B).

8. Dispositif selon une quelconque des revendications 1 à 7, caractérisé par la disposition à l'aplomb du couloir d'admission d'une trémie de chargement (100) équipée d'un couloir (501) de guidage d'un paquet de paillettes.

9. Dispositif selon la revendication 8, caractérisé par l'aménagement sur la trémie de chargement d'un lecteur de code barre adapté à coopérer avec un étiquetage à code barre d'un emballage du paquet de paillettes.

10. Dispositif selon l'une quelconque des revendications 1 à 7, caractérisé en ce qu'il est associé à une machine à remplir et souder les paillettes, avec un couloir d'admission (22) adapté à être alimenté directement par un système de bandes transporteuses (80) de sortie de la machine.

## Patentansprüche

1. Tintenstrahldruckvorrichtung für zylindrische Röhrchen zum Aufbewahren biologischer Flüssigkeiten (p), die in Kombination mit einer durch Automat (20) gesteuerten Tintenstrahldruckmaschine (10) umfasst:
- einen Einführschacht (104),der so ausgebildet ist, dass er die aufeinanderfolgenden Röhrchen führt,
- ein spezifisches Entnahmeorgan (130),
- ein Leitwerksystem (70), das so ausgebildet ist, dass es jeweils ein Röhrchen gegenüber einem Druckkopf vorbeilaufen läßt, gekennzeichnet durch die Anordnung am Ende des Einführschachtes (100) einer Fassadenplatte (110) mit Steuerschlitz (120), der mit einer Unterdruckquelle verbunden ist sowie einer individuellen Entnahmepalette (130) die mit hin- und hergehender, auf dieser Platte überstreichender Bewegung angeordnet ist.

2. Gerät nach Anspruch 1, gekennzeichnet durch ein Leitwerksystem (70), das unter der Fassadenplatte und unter der Druckstation durchläuft.

3. Gerät nach Anspruch 2, dadurch gekennzeichnet, daß das Leitwerksystem eine Reihenanordnung von Nutenrollen (700) aufweist, die in einem Gehäuse aufeinanderfolgen, das unterhalb der Fassadenplatte (110) und einer Druckstation (11) durchläuft, wobei das Innenvolumen dieses Gehäuses in Verbindung mit einer Unterdruckquelle über eine Vielzahl von in einer Rückenwand ausgesparten Löchern (712) und mit der Atmosphäre über einen nach oben offenen Schacht in Verbindung steht und in ihrem Boden einen aufragenden Teil der aufeinanderfolgenden Rollen der Reihenanordnung aufnimmt.

4. Gerät nach Anspruch 3, dadurch gekennzeichnet, daß ein mit einer Ventilatorantriebsgruppe (25) ausgestatteter Kasten eine gemeinsame Unterdruckquelle für den Steuerschlitz (120) und für die Rollenreihenanordnung (700) bildet.

5. Gerät nach Anspruch 4, dadurch gekennzeichnet, daß der Kasten auch einen Wechselstrommotor (126) zur Steuerung der Entnahmepalette enthält.

6. Gerät nach Anspruch 5, dadurch gekennzeichnet, daß der Motor einen Elektromagneten mit vertikaler Achse umfaßt, dessen Anker mit einer Steuergabel (131) mit zwei Armen angeschlossen ist, die jeweils gelenkig mit zwei Enden der Palette (130) sind und Fenster (135) durchsetzen, die hierzu in der Fassadenwand des Gehäuses ausgespart sind.

7. Gerät nach einem der Ansprüche 1 bis 6, gekennzeichnet durch einen Druckkopf (11), der auf einer seitlichen Platte vermittels einer Achse (142) gelagert ist, die in der Lage ist, sich auf einer gewählten Tiefe in einem Schlitz (143) quer bezogen auf die Fassadenwand der Vorrichtung zu verschieben, wobei der Kopf bezogen auf diese Achse entweder eine vertikale Arbeitsstellung ((11A) oder eine horizontale Wartungsstellung (11B) einnehmen kann.

8. Gerät nach einem der Ansprüche 1 bis 7, gekennzeichnet durch die Anordnung eines Aufgabetrichters (100) senkrecht unterhalb des Zuführungsschachtes, welcher mit einem Führungsschacht (501) zum Führen eines Röhrchenpaketes ausgestattet ist.

9. Gerät nach Anspruch 8, dadurch gekennzeichnet, daß auf dem Aufgabetrichter ein Barcode-Leser angebracht ist, der so ausgebildet ist, daß er mit einer Barcode-Etikettierung einer Verpackung des Röhrchenpaketes zusammenwirken kann.

10. Gerät nach einem der Ansprüche 1 bis 7, dadurch gekennzeichnet, daß es einer Maschine zum Füllen und Verschweißen der Röhrchen zugeordnet ist, mit einem Aufgabeschacht (22), der so ausgebildet ist, daß er direkt über ein Transportbandsystem (80) für den Maschinenausgang gespeist werden kann.

## Claims

1. An ink jet printing device for tubes for storing biological liquids (p) comprising, in combination with an ink jet printing machine (10) operated by an automatic device (20):
- an inlet passage (104) adapted to guide the successive tubes,
- a unitary sampling means (130),
- a routing system (70) adapted to cause the tubes to pass one by one past a printing head, characterised by the disposition, at the end of the inlet passage (100) of a facade panel (110) with a call slot (120) connected to a source of negative pressure and an individual sampling tube (130) to which a sweeping movement in reciprocating fashion is imparted on the said panel.

2. A device according to Claim 1, characterised by a routing system (70) passing under the facade panel and under a printing station.

3. A device according to Claim 2, characterised in that the routing system comprises a train of grooved rollers (700) disposed one after another in a casing passing under the facade panel (110) and a printing station (11), the space inside this casing communicating with a source of negative pressure via a plurality of holes (712) disposed in a dorsal wall and with the atmosphere via an upwardly open passage which receives at the bottom an emerging part of the successive rollers of the train.

4. A device according to Claim 3, characterised in that a casing in which there is a motorised fan unit (25) constitutes a common source of negative pressure for the call slot (120) and for the train of rollers (700).

5. A device according to Claim 4, characterised in that the container likewise accommodates an alternating current motor (126) for operating the sampling tube.

6. A device according to Claim 5, characterised in that the said motor comprises an electromagnet with an armature coupled to an operating fork (131) with two arms respectively articulated on the two ends of the tube (130) and traversing apertures (135) provided for the purpose in the front wall of the casing.

7. A device according to any one of Claims 1 to 6, characterised by a printing head (11) mounted on a lateral panel through a spindle (142) adapted to be positioned at a selected depth in a transverse slot (143) in relation to the front wall of the apparatus, the head itself being capable of assuming in respect of this axis any position either a vertical working position (11a) or a horizontal maintenance position (11b).

8. A device according to any one of Claims 1 to 7, characterised by, flush with the inlet passage, the provision of a loading funnel (100) provided with a passage (501) for guiding a bundle of tubes.

9. A device according to Claim 8, characterised by the provision on the loading funnel of a bar code scanner adapted to cooperate with a means of bar code labelling a package of the assembly of tubes.

10. A device according to any one of Claims 1 to 7, characterised in that it is associated with a machine for filling and welding the tubes, with an inlet passage (22) adapted to be fed directly by a system of conveyer belts (80) from the output of the machine.
